# FASCICULE DE BREVET EUROPEEN

(11) **EP 2 636 317 B1**
(45) Date de publication et mention de la délivrance du brevet: **22.10.2014**
(21) Numéro de dépôt: 13157930.2
(22) Date de dépôt: 06.03.2013
(51) Int. Cl.: A23L 1/275

(54) **Procédé de préparation d'un composé alimentaire de recouvrement de type peinture alimentaire**
Verfahren zur Herstellung einer Farbzusammensetzung in Form einer Beschichtung.
Process for preparation of a food colouring coating composition

(30) Priorité: 06.03.2012 FR 1252008
(43) Date de publication de la demande: 11.09.2013
(73) Titulaire: Petit, Gerard, 66230 Prats De Mollo La Preste (FR)
(72) Inventeur: Petit, Gerard, 66230 Prats De Mollo La Preste (FR)
(74) Mandataire: Rhein, Alain

(56) Documents cités:
- DE-A1- 19 801 151
- GB-A- 1 034 747
- JP-A- 7 079 735
- JP-A- 2005 130 827
- US-A1- 2004 022 904

## Description

La présente invention entre dans le domaine alimentaire et concerne un composé alimentaire de recouvrement de type peinture alimentaire.

L'invention a ainsi pour objet un procédé de fabrication d'une telle peinture alimentaire.

Ladite peinture selon l'invention trouvera une application préférentielle mais aucunement limitative dans la décoration de surface destinée à entrer en contact avec des aliments, notamment la face supérieure d'une assiette.

Ladite peinture pourra être utilisée en hôtellerie-restauration ou à domicile, pour décorer et agrémenter esthétiquement ladite surface d'une assiette ou d'un plat sur laquelle est disposée un met.

Pour ce faire, la peinture alimentaire selon l'invention est réalisée intégralement à base de produits naturels et comestibles.

De plus, une telle peinture se veut provisoire dans le cadre de son application, étant ingérée lors de la dégustation des aliments et permettant d'être nettoyée en même temps que ladite surface, à savoir l'assiette. Pour autant, ladite peinture doit présenter des caractéristiques assurant sa conservation.

A l'heure actuelle, la seule solution connue pour décorer la surface d'une assiette réside dans des sauces qui y sont appliquées. Toutefois, les coloris, les fluidités et les textures dépendent des sauces préparées et ces dernières ne permettent pas une conservation prolongée dans le temps.

Une alternative réside dans l'utilisation de colorants fluides. Ces colorants peuvent être naturels ou de synthèse, mais aussi artificiels. Un inconvénient réside dans l'innocuité non prouvée de certains colorants, en particulier artificiels.

Dans le domaine alimentaire, il est connu d'utiliser le vinaigre comme conservateur des pigments d'un colorant. A titre d'exemple, le document D1 GB 1 034 747 décrit un procédé pour la fabrication de chips, qui comprend l'étape consistant à plonger les morceaux de pomme de terre dans un bain de coloration avant l'étape de friture. Ledit bain consiste en une solution de vinaigre et d'un colorant comestible. En particulier, ledit vinaigre est de l'acide acétique en solution aqueuse à une concentration de 0,2 à 0,4 %, porté à une température de 200 degrés Celsius. Ainsi, on obtient des chips de différentes couleurs, avec une pigmentation stable dans le temps, pendant une durée au moins équivalente à la durée de conservation desdites chips, tant qu'elles sont propres à la consommation.

Toutefois, un tel procédé s'applique sur un produit alimentaire et vient s'y imprégner. Il dépend donc du matériau constituant la pomme de terre et de sa constitution.

D'autres documents connexes sont connus, à savoir US 2004/022904, JP 7 079735, JP 2005 130827 ou DE 198 01 151, mais qui n'apportent aucune solution ou aucun enseignement pour réaliser une peinture naturelle comestible, qui se conserve dans le temps.

GB 1 034 747 A divulgue un procédé pour la fabrication de chips, qui comprend l'étape consistant à plonger les morceaux dans un bain de coloration avant l'étape de friture, consistant d'une solution de vinaigre et d'un colorant comestible. De préférence, ledit vinaigre est l'acide acétique en solution dans l'eau à une concentration de 0,2 à 0 4%, et il est employé à une température de 200 °C. Ledit procédé permet d'obtenir des chips de différentes couleurs stables, qui conservent leur éclat pendant au moins tant que les chips sont comestibles.

En somme, il n'existe à l'heure actuelle aucune peinture de ce type, permettant d'être utilisée pour recouvrir une assiette ou un plat.

L'invention part de ce constat et apporte une solution au problème d'obtenir une composition de type peinture alimentaire ayant une conservation de plusieurs mois, une bonne stabilité microbiologique, sans changer de texture ni perdre de sa coloration. Ainsi, l'invention fournit un composé alimentaire de recouvrement ayant ces effets techniques.

Ainsi, la présente invention a pour but de pallier les inconvénients de l'état de la technique, en proposant un procédé de fabrication d'un composé alimentaire de recouvrement de type peinture alimentaire qui, d'une part, assure une tenue provisoire adaptée sur une surface destinée à recevoir un met, comme une assiette, d'autre part, est entièrement comestible et, d'autre part encore, permet une conservation de plusieurs mois.

Pour ce faire, l'invention consiste à combiner le faible pH d'un acide, tel du vinaigre, avec le pouvoir hygroscopique du sucre, conférant le caractère de conservation recherché en limitant l'apparition et le développement de microorganismes, notamment des bactéries. De plus, un colorant comestible est ajouté réalisé naturellement, assurant la conservation des pigments naturels. Enfin, un liant comestible sous forme d'amidon est combiné au mélange afin d'associer les différents éléments précédents, offrant une texture uniforme de la peinture.

Ainsi, l'invention a pour objet un procédé de fabrication d'un composé alimentaire de recouvrement de type peinture alimentaire, dans lequel :
- on prépare un colorant à base de pigments naturels dans une solution acide de type vinaigre ;
- on mélange 2 volumes de colorant pour 1 volume de sucre de type sirop de sucre de canne ;
- on prélève un quart de volume et on y ajoute un liant de type amidon à hauteur d'au moins 3% en poids du volume total ;
- on chauffe ledit mélange jusqu'à une température d'ébullition puis on ajoute ledit prélèvement de liant et chauffe le mélange obtenu jusqu'à une température d'ébullition ; et
- on laisse refroidir le mélange obtenu.

Selon d'autres caractéristiques préférentielles, de modes spécifiques de réalisation, la préparation du colorant peut consister en un mélange d'un volume de vinaigre blanc pour un volume de vinaigre balsamique.

Avantageusement, la préparation du colorant peut consister en une macération de fruits pendant une durée d'au moins une journée dans une solution acide de type vinaigre blanc.

De préférence, la préparation du colorant peut consister en une infusion de feuilles de thé pendant une durée d'au moins une heure dans une solution acide de type vinaigre blanc.

Selon un mode de réalisation, ledit procédé consiste à effectuer au moins une filtration dudit mélange obtenu, avant ou après refroidissement.

En outre, il consiste à ajouter un colorant supplémentaire sous forme de curry, de paprika, de safran, de curcuma, de fleur de bleuet ou de sirop de curaçao.

Par ailleurs, l'invention a pour objet les différentes peintures issues d'un tel procédé et de ses alternatives.

D'autres caractéristiques et avantages de l'invention ressortiront de la description détaillée qui va suivre des différents modes de réalisation non limitatifs de l'invention.

La présente invention concerne la fabrication d'un composé aliment de recouvrement de type peinture alimentaire.

Le procédé selon l'invention consiste mélanger au moins un colorant dans une solution acide à laquelle on rajoute une solution sucrée, agissant en tant que conservateur, puis un liant. Le mélange obtenu est alors chauffé afin d'uniformiser les précédents composants.

Plus particulièrement, dans ce procédé de fabrication on prépare un colorant à base de pigments naturels dans une solution acide de type vinaigre. En fonction de la couleur souhaitée, plusieurs préparations de colorant peuvent être envisagées. De telles préparations sont toutes à base de produits naturels et comestibles, sans ajout de conservateur, d'arome et de produit artificiel.

De plus, on mélange 2 volumes de colorant pour 1 volume de sucre de type sirop de sucre de canne. La combinaison acide et sucre en phase liquide ainsi réalisée offre le pouvoir de conservation de la future peinture.

On notera que l'acidité du vinaigre peut varier entre 5 et 20%, de préférence 6 ou 8 %. De plus, la peinture obtenue présente un pH aux alentours de 3, de préférence 3. Cette acidité améliore la durée de conservation et limite la prolifération des bactéries.

Par ailleurs, on prélève un quart de volume et on y ajoute un liant de type amidon à hauteur d'au moins 3% en poids du volume total, mesuré en gramme. En somme, pour les trois volumes d'acide et de sucre, on ajoute trois fois au moins 3% en poids d'amidon.

Dans un exemple concret, 3% en poids d'amidon correspond pour 1 litre de mélange à 30 grammes. De plus, pour un mélange comprenant 3 litres, constitués de deux litres de vinaigre et d'un litre de sirop de canne à sucre, l'ajout d'amidon correspond à au moins 90 grammes.

Selon un mode préférentiel de réalisation, l'ajout peut consister exactement à au moins 50 grammes par litre de mélange, de préférence exactement 62 grammes d'amidon.

On notera que l'amidon peut préférentiellement être de l'amidon de maïs en poudre, en particulier sous forme de fécule de maïs.

Puis, on chauffe ledit mélange jusqu'à une température d'ébullition puis on ajoute ledit prélèvement de liant et on chauffe le mélange obtenu jusqu'à une température d'ébullition. En particulier, la température d'ébullition comprise entre 90 et 98 degrés Celsius, de préférence 91 ou 96 °C.

Finalement, on laisse refroidir le mélange obtenu. En particulier, cette étape de refroidissement constitue un repos à température et atmosphère ambiantes, en particulier à une température d'environ 20 degrés Celsius. Ce repos dure jusqu'à refroidissement complet, de préférence pendant une durée d'au moins 24 heures.

Comme évoqué précédemment, afin d'obtenir des couleurs de peinture différentes, plusieurs colorants sont préparés à base de pigments différents.

Tout d'abord, afin d'obtenir une couleur sombre, proche du noir, la préparation du colorant consiste en un mélange d'un volume de vinaigre blanc pour un volume de vinaigre balsamique.

On notera que le vinaigre blanc présente alors une acidité de 8% tandis que le vinaigre balsamique présente une acidité inférieure de 6%.

Pour obtenir une autre coloration, la préparation du colorant consiste en une macération de fruits pendant une durée d'au moins une journée dans une solution acide de type vinaigre blanc. De préférence, la durée de macération peut se prolonger pendant 10 jours à température et atmosphère ambiantes. Cette étape de macération permet d'extraire et de concentrer dans la solution acide les pigments présents au sein des fruits.

Plus précisément, pour obtenir des pigments de couleurs rose, rouge et carmin, il est possible de réaliser une macération de framboises, de mures, de groseilles ou de cassis, ou bien d'un mélange de l'un et/ou l'autre de ces fruits.

A titre d'exemple, une couleur rouge est obtenue à base de framboises, rose à base de groseilles et carmin à base de mures.

Selon un mode de réalisation particulier, afin d'obtenir un colorant vert, la préparation du colorant consiste en une infusion de thé pendant une durée d'au moins une heure dans une solution acide de type vinaigre blanc. De préférence, cette macération dure pendant au moins 24 heures. Elle peut être réalisée à partir d'une infusion de feuilles de thé, mais préférentiellement de thé en poudre, notamment du thé vert réduit en poudre de type thé matcha. Elle est réalisée à froid, à savoir à température et atmosphère ambiantes, de préférence à une température de 20 degrés Celsius. De plus, il peut être nécessaire d'effectuer une agitation périodique ou constante pendant cette période d'infusion. En particulier, cette agitation peut s'apparenter à un fouettage, de manière à oxygéner la solution, facilitant l'infusion.

A ce titre, plusieurs variétés de thé peuvent être utilisées. On notera que pour obtenir une couleur verte soutenue, les feuilles fraiches de thé vert comprennent assez de pigments.

Selon une caractéristique additionnelle, le procédé consiste à ajouter un colorant supplémentaire sous forme de curry, de paprika, de safran, de curcuma, de fleur de bleuet ou de sirop de curaçao. L'un ou l'autre des colorants supplémentaires peuvent être ajoutés au moment de l'ébullition, à une température d'environ 91°C, du mélange obtenu ou bien après refroidissement et avant filtration.

A titre d'exemple, une couleur jaune peut être obtenue à partir d'un mélange initial sans colorant par ajout de curcuma, une couleur jaune intense par ajout de safran, une couleur jaune orange pour ajout de curry, une couleur rouge orange par ajout de paprika.

De façon différente, à partir d'un mélange contenant déjà un colorant, il est possible d'obtenir par exemple à partir de la macération verte de thé une couleur bleu vert par ajout de curcuma, de fleurs de bleuet et de sirop de curaçao. De la même façon, à partir d'un colorant rouge obtenu à base de cassis macérés, il est possible d'obtenir une couleur jaune pourpre par ajout de curcuma.

On notera que les quantités de colorant supplémentaire peuvent être de l'ordre de 1 à 30% en poids en grammes par rapport au poids du volume total du mélange obtenu. Par exemple, le colorant peut consister en un ajout de 5 à 50 grammes par litre du volume total du mélange obtenu.

De la même façon, des condiments peuvent être ajoutés à l'une ou l'autre desdites étapes. En effet, la peinture selon l'invention étant comestible, il est possible de l'agrémenter pour en modifier le goût par l'ajout de condiments, ainsi que des herbes aromatiques.

De préférence, une étape subsidiaire de filtration peut être envisagée afin d'extraire de la peinture toute particule résultant de la préparation, notamment provenant des différents composés. Ainsi, le procédé prévoit d'effectuer au moins une filtration dudit mélange obtenu, avant refroidissement. Préférentiellement, trois filtrations successives sont effectuées, de préférence en réduisant la granulométrie des déchets retenus.

En guise d'exemple de fabrication, on notera que 1 volume précédemment évoqué peut correspondre à 1 litre.

Ainsi, le procédé selon l'invention permet de fabriquer une peinture comestible mais qui se conserve dans le temps, allant jusqu'à une conservation de plusieurs mois sans changer de texture, ni perdre de sa coloration.

De plus, des contrôles d'hygiène et des tests bactériologiques ont été menés montrant après un mois entre la date de fabrication et la date d'analyse, que la composition spécifique à base de vinaigre et sucre de la peinture selon l'invention assure une absence de flore bactérienne, en particulier de staphylocoque doré « staphylococcus aureus », de listeria ou de coliformes.

## Revendications

1. Procédé de fabrication d'un composé alimentaire de recouvrement de type peinture alimentaire, dans lequel :
- on prépare un colorant à base de pigments naturels dans une solution acide de type vinaigre ;
- on mélange 2 volumes de colorant pour 1 volume de sucre de type sirop de sucre de canne ;
- on prélève un quart de volume et on y ajoute un liant de type amidon à hauteur d'au moins 3% en poids du volume total ;
- on chauffe ledit mélange jusqu'à une température d'ébullition puis on ajoute ledit prélèvement de liant et chauffe le mélange obtenu jusqu'à une température d'ébullition; et
- on laisse refroidir le mélange obtenu.

2. Procédé selon la revendication 1, **caractérisé en ce que** la préparation du colorant consiste en un mélange d'un volume de vinaigre blanc pour un volume de vinaigre balsamique.

3. Procédé selon la revendication 1, **caractérisé en ce que** la préparation du colorant consiste en une macération de fruits pendant une durée d'au moins une journée dans une solution acide de type vinaigre blanc.

4. Procédé selon la revendication 1, **caractérisé en ce que** la préparation du colorant consiste en une infusion de feuilles de thé pendant une durée d'au moins une heure dans une solution acide de type vinaigre blanc.

5. Procédé selon l'une quelconque des revendications précédentes, **caractérisé en ce qu'**il consiste à effectuer au moins une filtration dudit mélange obtenu, avant ou après refroidissement.

6. Procédé selon l'une quelconque des revendications précédentes, **caractérisé en ce qu'il** consiste à ajouter un colorant supplémentaire sous forme de curry, de paprika, de safran, de curcuma, de fleur de bleuet ou de sirop de curaçao.

## Patentansprüche

1. Verfahren zur Zubereitung einer für Lebensmittel geeigneten Verbindung der Art Lebensmittelfarbe, bei dem:
- der Farbstoff mit natürlichen Pigmente wird in einer Säurelösung der Art Essig zubereitet;
- 2 Volumen Farbstoff werden mit 1 Volumen Zucker der Art Rohrzuckersirup gemischt;
- ein Viertelvolumen wird entnommen und ein Bindemittel der Art Stärke wird in Höhe von mindestens 3 Gewichts-%, bezogen auf das Gesamtvolumen, zugegeben;
- die besagte Mischung wird auf Siedetemperatur erhitzt, dann wird das entnommene Bindemittel zugegeben und die erhaltene Mischung wird auf Siedetemperatur erhitzt; und
- die besagte Mischung lässt man abkühlen.

2. Verfahren nach Anspruch 1, **dadurch gekennzeichnet, daß** die Zubereitung des Farbstoffes aus einer Mischung von einem Volumen weißer Essig mit einem Volumen Balsamico-Essig besteht.

3. Verfahren nach Anspruch 1, **dadurch gekennzeichnet, daß** die Zubereitung des Farbstoffes aus einer Mazeration von Früchten während einem Zeitraum von mindestens einem Tag in einer sauren Lösung wie weißem Essig besteht.

4. Verfahren nach Anspruch 1, **dadurch gekennzeichnet, dass** die Zubereitung des Farbstoffes aus einer Infusion von Teeblättern während einem Zeitraum von mindestens einer Stunde in einer sauren Lösung wie weißem Essig besteht.

5. Verfahren nach einem der vorhergehenden Ansprüche, **dadurch gekennzeichnet, daß** es darin besteht, mindestens eine Filtrierung der besagten erhaltenen Mischung vor oder nach dem Abkühlen durchzuführen.

6. Verfahren nach einem der vorhergehenden Ansprüche, **dadurch gekennzeichnet, daß** es darin besteht, einen zusätzlichen Farbstoff in der Form von Curry, Paprika, Safran, Kurkuma, Kornblumenblüten oder Curaçao-Blue-Sirup zuzugeben.

## Claims

1. A method for manufacturing a covering food compound such as food-safe paint, wherein:
- a natural-pigment based dyestuff is prepared in a vinegar-like acid solution;
- 2 volumes of dyestuff mixed with 1 volume of sugar such as cane sugar syrup;
- one quarter of a volume is sampled and a binder such as starch is added in an amount of at least 3 weight % of the total volume;
- said mixture is heated to a boiling temperature, then said sample of binder is added and the resulting mixture is heated to a boiling temperature; and
- the resulting mixture is allowed to cool.

2. A method according to claim 1, wherein the preparation of the dyestuff consists of a mixture of one volume of white vinegar with one volume of balsamic vinegar.

3. A method according to claim 1, wherein the preparation of the dyestuff consists of a maceration of fruit for a period of at least one day in an acid solution such as white vinegar.

4. A method according to claim 1, wherein the preparation of the dyestuff consists of an infusion of tea leaves for a period of at least one hour in an acid solution such as white vinegar.

5. A method according to any of the preceding claims, wherein it consists in performing at least one filtering of said resulting mixture, before or after cooling.

6. A method according to any pf the preceding claims, wherein it consists in adding an additional dyestuff in the form of curry, paprika, saffron, turmeric, wild blueberry flower or curacao blue syrup.
